# EUROPÄISCHE PATENTSCHRIFT

(11) **EP 2 711 659 B1**
(45) Veröffentlichungstag und Bekanntmachung des Hinweises auf die Patenterteilung: **08.11.2017**
(21) Anmeldenummer: 13183635.5
(22) Anmeldetag: 10.09.2013
(51) Int. Cl.: F28F 9/18, F28F 21/08, F28D 7/16, B23K 1/00, F28D 21/00, B23K 1/002

(54) **Verfahren zur Herstellung eines Wärmetauschers**
Method for manufacturing a heat exchanger
Procédé de fabrication d'un échangeur thermique

(30) Priorität: 19.09.2012 DE 102012108821
(43) Veröffentlichungstag der Anmeldung: 26.03.2014
(60) Teilanmeldung: 16160435.0
(73) Patentinhaber: Benteler Automobiltechnik GmbH, 33102 Paderborn (DE)
(72) Erfinder: Aul, Eugen, 31787 Hameln (DE)
(74) Vertreter: Ksoll, Peter

(56) Entgegenhaltungen:
- EP-A1- 1 982 790
- EP-A1- 2 233 876
- EP-A2- 0 957 186
- WO-A1-2006/102736
- DE-A1-102005 030 438
- DE-A1-102005 055 481
- JP-A- 2005 055 153
- US-A- 4 515 305
- US-A- 4 703 885
- US-A1- 2005 040 023
- US-A1- 2006 254 761

## Beschreibung

Die vorliegende Erfindung betrifft ein Verfahren zur Herstellung eines Rohrbündelwärmetauschers für ein Kraftfahrzeug gemäß den Merkmalen im Patentanspruch 1.

Aus dem Stand der Technik ist es bekannt, dass in Kraftfahrzeugen zur Wärmeübertragung Wärmetauscher eingesetzt werden. Beispielsweise werden solche Wärmetauscher als Kühler eingesetzt, um das Kühlwasser eines Kühlwasserkreislaufs einer Verbrennungskraftmaschine zu kühlen. Jedoch ist es auch bekannt, Gaswärmetauscher einzusetzen, mit deren Hilfe ein durch die Verbrennungskraftmaschine erzeugtes Abgas gekühlt wird. Zumeist werden dazu zwei verschiedene Medien durch den Wärmetauscher geleitet, wobei dann innerhalb des Wärmetauschers ein Wärmeübergang von einem Medium auf das andere erfolgt.

Zur konstruktiven Ausgestaltung eines Wärmetauschers sind verschiedenste Bauarten bekannt. So gibt es Plattenwärmetauscher oder aber auch Rohrbündelwärmetauscher. Letzterenfalls werden mehrere Wärmetauscherrohre innerhalb einer Wärmetauscherkassette angeordnet und über einen Rohrbund, der zumeist auch als Lochblech ausgebildet ist, formschlüssig und insbesondere fluiddicht gekoppelt. Durch die Wärmetauscherrohre strömt somit dann ein erstes Medium, wobei ein zweites Medium die Wärmetauscherrohre selbst umströmt.

Zur Herstellung solcher Rohrbündelwärmetauscher werden die Wärmetauscherrohre in das Lochblech eingesetzt und in diesem formschlüssig und/oder stoffschlüssig lagefixiert. Im Falle einer formschlüssigen Lagefixierung wird das Rohr zumindest abschnittsweise in das Lochblech eingeführt und aufgeweitet bzw. aufgetulpt. Im Falle einer stoffschlüssigen Lagefixierung wird das Rohr entweder in dem Lochblech verlötet, verklebt oder aber auch verschweißt.

In dem Übergang zwischen Wärmetauscherrohr und Lochblech treten in der Praxis häufig, insbesondere bei langjähriger und intensiver Nutzung oder aber auch bei Durchströmung mit hochkorrosiven Medien Leckagen auf, so dass bei der Herstellung von aus dem Stand der Technik bekannten Wärmetauschern hohe Produktionskosten zur Herstellung der Verbindung zwischen Wärmetauscherrohr und Lochblech aufgrund eines erhöhten Fertigungsaufwands oder besonderen Materialeinsatzes entstehen.

Aus der US 4,515,305 A1 ist ein Verfahren zum Koppeln eines Rohrs in einem Lochblech bekannt. Das Rohr wird hierzu in das Lochblech eingeführt und durch einen Ausziehdorn aufgeweitet. Das Rohr wird hierzu an einer Außenmantelfläche mit einem Lotmittel versehen und ein Ausziehdorn in das Rohr eingeführt. Das Rohr wird zusammen mit dem Ausziehdorn in eine Öffnung eines Lochbleches eingesetzt und der Ausziehdorn ausgezogen. Hierdurch wird eine formschlüssige Verbindung zwischen Rohr und Lochblech hergestellt. Anschließend wird ein Lötvorgang durchgeführt.

Aus der EP 0 957 186 A2 ist ein Abdichtungselement von Polymerschmelze führenden Bauteilen bekannt. Hierzu wird ein Hohlkörper in eine Bohrung eingesetzt. Der Hohlkörper dehnt sich durch thermische Einwirkung aus und dichtet den Kanal ab. Nach Erkalten ist der Hohlkörper wieder entnehmbar. Ferner ist aus der DE 10 2005 055 481 A1 die Herstellung eines Kraftfahrzeugwärmetauschers bekannt, bei dem ferritische und austenitische Werkstoffe eingesetzt und miteinander verlötet werden.

Aufgabe der vorliegenden Erfindung ist es daher, ausgehend vom Stand der Technik, ein Verfahren aufzuzeigen, mit dem es möglich ist, einen Rohrwärmetauscher einfach und kostengünstig herzustellen, bei gleichzeitig hoher Dichtigkeit im Kopplungsbereich zwischen Wärmetauscherrohr und Lochblech sowie der Erhöhung der thermomechanischen Festigkeit und Schwingfestigkeit.

Die zuvor genannte Aufgabe wird erfindungsgemäß mit den Merkmalen des Verfahrens zur Herstellung eines Rohrbündelwärmetauschers für ein Kraftfahrzeug im Patentanspruch 1 gelöst.

Vorteilhafte Ausgestaltungsvarianten des erfindungsgemäßen Verfahrens sind in den abhängigen Ansprüchen beschrieben.

Das erfindungsgemäße Verfahren zur Herstellung eines Rohrbündelwärmetauschers für ein Kraftfahrzeug zeichnet sich durch folgende Verfahrensschritte aus:
- Bereitstellen eines Rohrs und eines Lochbleches, wobei das Rohr aus einem austenitischen Stahl ausgebildet ist und das Lochblech aus einem ferritischen Stahl ausgebildet ist,
- Zumindest abschnittsweises Einführen des Rohres in eine Öffnung des Lochbleches, wobei zwischen einer Außenmantelfläche des Rohres und der Innenmantelfläche der Öffnung eine Spielpassung ausgebildet wird,
- Verlöten des Abschnittes des Rohres, der sich in der Öffnung befindet, mit der Innenmantelfläche der Öffnung, wobei sich das Rohr stärker ausdehnt als die Innenmantelfläche der Öffnung, dergestalt, dass während des Lötvorganges der Spalt zwischen der Außenmantelfläche des Rohres und der Innenmantelfläche der Öffnung auf eine Übermaßpassung geschrumpft wird.

Der erfindungsgemäße Ansatz sieht vor, dass zwei Werkstoffe, die mit Hinblick auf die Verwendung in einem Wärmetauscher gute Wärmeleitfähigkeiten besitzen sowie eine hohe Resistenz gegen Korrosion und ebenfalls eine hohe Langlebigkeit besitzen zur Herstellung des erfindungsgemäßen Wärmetauschers einzusetzen. Ebenfalls sind die Werkstoffe untereinander thermisch gut miteinander fügbar. Die Werkstoffe werden jedoch derart ausgewählt, dass der Werkstoff des Rohrs einen höheren Wärmeausdehnungskoeffizienten besitzt, als der Werkstoff des Lochblechs. Das Rohr wird somit zumindest abschnittsweise in eine Öffnung des Lochblechs eingeführt und lagefixiert. Das Rohr und das Lochblech können durch eine Hilfsvorrichtung, beispielsweise eine Stütze während des thermischen Fügevorgangs zueinander lagefixiert werden.

Im Anschluss an das Zusammensetzen von Rohr und Lochblech wird das Rohr mit dem Lochblech verlötet. Beispielsweise kann die gesamte Anordnung in einen Lötofen verbracht werden und miteinander verlötet werden. Durch die Erwärmung während des Lötvorgangs dehnt sich das Rohr stärker aus als die Innenmantelfläche der Öffnung. Hierdurch wird ein entstehender Lotspalt zwischen der Außenmantelfläche des Rohrs mit der Innenmantelfläche der Öffnung des Lochblechs minimiert, was sich positiv auf die Güte der hergestellten Lötverbindung auswirkt.

Damit der erfindungsgemäße Effekt erzielt wird, wird das Rohr aus einer austenitischen Stahllegierung ausgebildet und das Lochblech aus einer ferritischen Stahllegierung. Gegebenenfalls weitere Legierungsbestandteile in den beiden oben genannten Legierungen sind im Rahmen der Erfindung inbegriffen. Als besonderer Vorteil stellt sich heraus, dass die Fertigungstoleranzen zur Herstellung des Lochblechs und des Rohrs größer sein können, als bei konventionell bekannten Lötprozessen. Diese wird jedoch durch den Lötprozess und die sich aufgrund der unterschiedlichen Wärmeausdehnungskoeffizienten einstellende Verringerung des Lotspalts ausgeglichen, ohne dass die damit hergestellte Lotverbindung in ihrer Qualität beeinflusst wird. Im Gegenteil, diese wird sogar aufgrund der verschiedenen Wärmeausdehnungskoeffizienten und dem minimierten Lotspalt in ihrer Qualität gesteigert.

Es wird zwischen einer Außenmantelfläche des Rohrs und der Innenmantelfläche der Öffnung eine Spielpassung ausgebildet. Hierdurch ist es möglich, zunächst die beiden Bauteile ineinander zu setzen. Zwar verbleibt zwischen den beiden Bauteilen zunächst ein hinreichender Lotspalt, so dass ein Lotzusatzwerkstoff und/oder ein Flussmittel in den Spalt fließen kann oder aber in dem sich einstellenden Lotspalt eingeschlossen ist. Durch den eigentlichen Lötvorgang selber dehnt sich dann das Rohr stärker aus als die Innenmantelfläche der Öffnung des Lochblechs, so dass der Lotspalt minimiert wird, was die Güte der damit hergestellten Lotverbindung erhöht.

Hierzu wird dann während des Lötvorgangs selber der Spalt zwischen der Außenmantelfläche des Rohrs und der Innenmantelfläche der Öffnung auf eine Übermaßpassung geschrumpft.

Der Lötvorgang selber wird dann bei einer Temperatur zwischen 300° C und 800° C durchgeführt oder aber als Hochtemperaturlötvorgang mit Temperaturen von mehr als 800° C, insbesondere mehr als 900° C, wobei insbesondere ein Lotflussmittel und/oder ein Zusatzwerkstoff verwendet wird. Der Lötvorgang selber kann dabei als Hartlötvorgang oder aber auch als Hochtemperaturlötvorgang durchgeführt werden. Im Rahmen der Erfindung wird insbesondere die gesamte Apparatur, mithin die zusammengesetzten Bauteile in einen Lötofen verbracht. Auch ist ein Induktionslötprozess mit der Hilfe von geeigneten Induktionsmitteln vorstellbar. Im Rahmen der Erfindung wird insbesondere ein Hochtemperaturlöten oder ein Hartlöten durchgeführt. Die Lötverfahren werden insbesondere als Vakuumverfahren, mithin als Vakuumlöten durchgeführt. Ebenfalls ist ein Löten unter Schutzgas vorstellbar, wobei hier insbesondere H2 oder aber H2/N2 als Schutzgasatmosphäre gewählt wird. Bevorzugt wird kein Flussmittel im Rahmen der Erfindung verwendet. Als Lotpaste selbst wird insbesondere ein Nickelbasislot oder aber auch ein Eisenbasislot, hier insbesondere ein Edelstahlbasislot verwendet.

Für das Lochblech wird insbesondere ein ferritischer Chromstahl verwendet, der gegebenenfalls andere Gefügebestandteile aufweisen kann. Insbesondere wird ein Werkstoff aus der nachfolgenden Gruppe verwendet: 1.4016, 1.4509, 1.4510, 1.4521.

Für das Rohr selber bzw. das Wärmetauscherrohr wird ein austenitischer rostfreier Stahl verwendet, der gegebenenfalls weitere Gefügebestandteile aufweisen kann. Im Rahmen der Erfindung wird insbesondere ein Stahl verwendet, der aus der nachfolgend aufgezählten Gruppe ausgewählt ist: 1.4301, 1.4307, 1.4401, 1.4306.

Im Rahmen der Erfindung ist das Rohr bzw. das Wärmetauscherrohr besonders bevorzugt als Beulenrohr oder aber auch als Wellrohr oder Drallrohr ausgebildet. Hierdurch wird in dem Rohr selbst eine Turbulenz erzeugt, die die Wärmetauscherleistung erhöht, wobei der Gegendruck innerhalb des Rohrs selbst in Bezug auf die Erhöhung der Wärmetauscherleistung zu vernachlässigen ist.

Der Wärmetauscher wird als Rohrbündelwärmetauscher hergestellt, wobei mehrere Rohre an mindestens einem Lochblech verlötet werden und die Rohre mit dem Lochblech in einem Außenblech oder einer Kassette angeordnet werden. Die Kassette selbst weist dann wiederum Anschlüsse auf, um hier Fluidleitungen der durch den Wärmetauscher zu führenden Fluide anzuschließen.

Insbesondere wird der Werkstoff des Lochblechs in Relation zu dem Werkstoff des Rohrs derart ausgewählt, dass deren Wärmeausdehnungskoeffizient sich im Verhältnis von 1 : 1,2 bis 2, insbesondere von 1 : 1,4 bis 1,6 und ganz besonders bevorzugt von 1 : 1,5 unterscheiden.

Im Rahmen der Erfindung betragen die thermischen Ausdehnungskoeffizienten im Mittel bei ferritischen Stählen circa 12 x 10⁶1/K und bei austenitischen Stählen circa 17 x 10⁶1/K. Hierdurch wird bei um circa 30 % erhöhten Toleranzen, mithin einer stärkeren Abweichung der Sollmaße von Rohr und Lochblech, eine gleiche Festigkeit der hergestellten Lötverbindung erreicht. Alternativ dazu wird bei gleichbleibenden Toleranzen eine Steigerung der Festigkeit der hergestellten Verbindung erreicht. Bei eingesetzten Nickelloten bilden sich bei großen Spalten intermetallische Phasen aus, die die Schwingfestigkeit der hergestellten Lotverbindung reduzieren. Bei eingesetzten Kupferloten bilden sich bei großen Spalten insbesondere die natürlichen Eigenschaften des Reinkupfers aus, mithin wird eine sehr duktile Lotverbindung mit niedriger für Kupfer spezifischer Festigkeit bereitgestellt.

Die vorliegende Erfindung sieht hier vor, austenitische Stähle mit einem kubisch flächenzentrierten Kristallgitter für das Rohr einzusetzen, wobei die austenitischen Stähle unter anderem die Legierungsbestandteile Chrom und Nickel aufweisen. Für die ferritischen Stähle ist ein kubisch raumzentriertes Kristallgitter ausgebildet, wobei die ferritischen Stähle maßgeblich für das Lochblech eingesetzt werden. Die ferritischen Stähle selber sind maßgeblich mit Chrom legiert und weisen einen zu vernachlässigenden oder aber keinen Anteil des kostenintensiven Legierungselements Nickel auf.

Das kubisch flächenzentrierte Kristallgitter der austenitischen Stähle weist eine hohe Dauerfestigkeit auf für einen Temperaturbereich von circa 0,4 mal der Schmelztemperatur des Werkstoffs. Die austenitischen Rohre des Wärmetauschers sind jedoch direkt im Kühlmedium, maßgeblich im Kühlwasser des Wärmetauschers eingebettet bzw. von diesem umströmt, wobei die durchschnittliche Temperatur des Kühlmediums bei 50° bis 90° C, insbesondere bei 60° bis 70° C liegt. Dies ist deutlich unter einem Temperaturniveau von 0,4 mal der Schmelztemperatur des Werkstoffs.

Während des auf den Lotvorgang folgenden Abkühlens schrumpfen die Bauteile wiederum annähernd in ihren Ursprungszustand zurück. Hierdurch entsteht ein innerer Spannungsvorgang, so dass der Wärmetauscher zunächst nach der eigentlichen Herstellung und vor seinem Verbau bzw. Einsatz in dem Kraftfahrzeug besonders qualitativ hochwertigen Lötverbindungen unterzogen wird. Während des Einsatzes im Kraftfahrzeug ist der Kraftfahrzeugwärmetauscher jedoch dann Einsatzbedingungen aufgrund der durch ihn zu führenden Medien von bis zu mehreren 100° C ausgesetzt. Hierdurch entsteht während des Einsatzes eine derartige Wärmebehandlung, die die Eigenspannungen abbaut, so dass bereits nach einem Betrieb des Kraftfahrzeugwärmetauschers von 2 bis 5 Stunden die Eigenspannungen nahezu vollständig und dauerhaft abgebaut sind. Mithin steht der erfindungsgemäß hergestellte Kraftfahrzeugwärmetauscher dann bei Raumtemperatur nicht mehr unter Eigenspannung. Im Betriebszustand dehnen sich wiederum die austenitischen Werkstoffe stärker aus gegenüber den ferritischen Werkstoffen, was die thermomechanische Stabilität eines solch hergestellten Kraftfahrzeugwärmetauschers erhöht und gegenüber herkömmlichen verlöteten Kraftfahrzeugwärmetauschern, welche insbesondere aus gleichartigen Werkstoffen ausgebildet sind, eine Erhöhung der Lebensdauer in Bezug auf die Standfestigkeit erreichen.

Weitere Vorteile, Merkmale, Eigenschaften und Aspekte der vorliegenden Erfindung werden in der nachfolgenden Beschreibung erläutert. Bevorzugte Ausführungsvarianten werden in den schematischen Figuren dargestellt. Diese dienen dem einfachen Verständnis der Erfindung. Es zeigen:

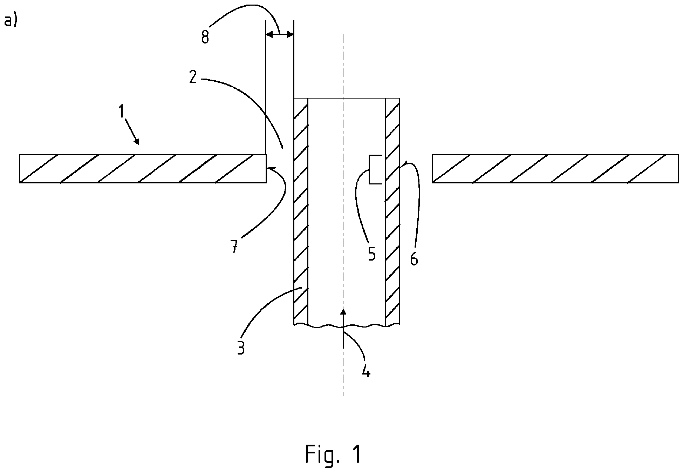

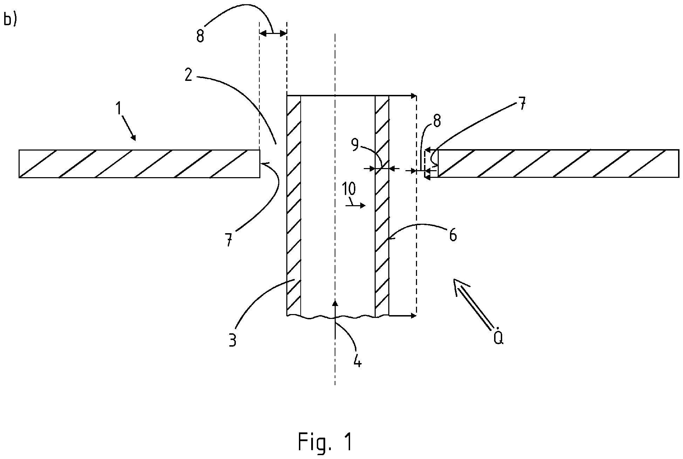

- Figur 1a, b: die Anordnung von einem Rohr in einem Lochblech vor und während dem Lötvorgang.

In den Figuren werden für gleiche oder ähnliche Bauteile dieselben Bezugszeichen verwendet, auch wenn eine wiederholte Beschreibung aus Vereinfachungsgründen entfällt.

Figur 1a zeigt ein Lochblech 1, dass eine Öffnung 2 aufweist, wobei in die Öffnung 2 ein Rohr 3 eingeführt ist. Das Rohr 3 ist somit in Längsrichtung 4 mit einem Längenabschnitt 5 innerhalb der Öffnung 2 angeordnet, so dass zwischen einer Außenmantelfläche 6 des Längenabschnitts 5 und einer Innenmantelfläche 7 der Öffnung 2 ein Lötspalt 8 ausgebildet wird. Aufgrund der Wärmezufuhr Q̇ durch den Lötvorgang wird gemäß Figur 1b die Wandung 9 des Rohrs 3 in Radialrichtung 10 nach außen ausgedehnt, wobei die Innenmantelfläche 7 des Lochblechs 1 bezogen auf die Radialrichtung 10 des Rohrs 3 nach innen ausgedehnt wird. Hierdurch wird der entstehende Lötspalt 8 deutlich verringert und ein nicht näher dargestelltes Lot kann hierein fließen und die Innenmantelfläche 7 der Öffnung 2 mit der Außenmantelfläche 6 des Rohrs 3 verbinden.

### Bezugszeichen:

1 - Lochblech
2 - Öffnung
3 - Rohr
4 - Längsrichtung zu 3
5 - Längenabschnitt
6 - Außenmantelfläche
7 - Innenmantefläche
8 - Lotspalt
9 - Wandung zu 3
10- Radialrichtung zu 3
Q̇ - Wärmezufuhr

## Patentansprüche

1. Verfahren zur Herstellung eines Rohrbündelwärmetauschers für ein Kraftfahrzeug, **gekennzeichnet, durch** folgende Verfahrensschritte:
- Bereitstellen eines Rohrs (3) und eines Lochbleches (1), wobei das Rohr (3) aus einem austenitischen Stahl ausgebildet ist und das Lochblech (1) aus einem ferritischen Stahl ausgebildet ist,
- Zumindest abschnittsweises Einführen des Rohres (3) in eine Öffnung (2) des Lochbleches (1), wobei zwischen einer Außenmantelfläche (6) des Rohres (3) und der Innenmantelfläche (7) der Öffnung (2) eine Spielpassung ausgebildet wird.
- Verlöten des Abschnittes des Rohres (3), der sich in der Öffnung (2) befindet mit der Innenmantelfläche (7) der Öffnung (2), wobei sich das Rohr (3) stärker ausdehnt als die Innenmantelfläche (7) der Öffnung (2), dergestalt, dass während des Lötvorganges der Spalt zwischen der Außenmantelfläche (6) des Rohres (3) und der Innenmantelfläche (7) der Öffnung (2) auf eine Übermaßpassung geschrumpft wird.

2. Verfahren nach Anspruch 1, **dadurch gekennzeichnet, dass** der Lötvorgang bei einer Temperatur zwischen 300 und 800 Grad Celsius durchgeführt wird oder als Hochtemperaturlötvorgang, wobei insbesondere ein Lotflußmittel und/oder Lotzusatzwerkstoff verwendet wird.

3. Verfahren nach einem der Ansprüche 1 oder 2, **dadurch gekennzeichnet, dass** für das Lochblech (1) ein ferritischer Chromstahl verwendet wird.

4. Verfahren nach einem der Ansprüche 1 bis 3, **dadurch gekennzeichnet, dass** für das Rohr (3) ein austenitischer rostfreier Stahl verwendet wird.

5. Verfahren nach einem der Ansprüche 1 bis 4, **dadurch gekennzeichnet, dass** ein Rohrbündelwärmetauscher hergestellt wird, wobei mehrere Rohre (3) an mindestens einem Lochblech (1) verlötet werden und die Rohre (3) mit dem Lochblech (1) in einem Außenblech oder einer Kassette angeordnet werden.

6. Verfahren nach einem der Ansprüche 1 bis 5, **dadurch gekennzeichnet, dass** der Wärmeausdehnungskoeffizient des Werkstoffes des Lochbleches (1) und der Werkstoff des Rohres (3) in einem Verhältnis von 1 zu 1,2 bis 2, insbesondere 1 zu 1,4 bis 1,6 stehen.

## Claims

1. Method for manufacturing a pipe bundle heat exchanger for a motor vehicle **characterised by** the following method steps:
- providing a pipe (3) and a perforated sheet (1), wherein the pipe (3) is configured from an austenitic steel and the perforated sheet (1) is configured from a ferritic steel,
- inserting the pipe (3) at least in sections into an opening (2) of the perforated sheet (1), wherein a clearance fit is configured between an outer shell surface (6) of the pipe (3) and the inner shell surface (7) of the opening (2),
- soldering the section of the pipe (3) which is located in the opening (2) to the inner shell surface (7) of the opening (2), wherein the pipe (3) is expanded to a greater extent than the inner shell surface (7) of the opening (2) such that during the soldering process the gap between the outer shell surface (6) of the pipe (3) and the inner shell surface (7) of the opening (2) is shrunk to an interference fit.

2. Method according to claim 1, **characterised in that** the soldering process is carried out at a temperature of between 300 and 800 degrees Celsius or as a high-temperature soldering process, wherein a solder flux and/or solder additive is in particular used.

3. Method according to any one of claims 1 or 2, **characterised in that** a ferritic chrome steel is used for the perforated sheet (1).

4. Method according to any one of claims 1 or 3, **characterised in that** an austenitic stainless steel is used for the pipe (3).

5. Method according to any one of claims 1 or 4, **characterised in that** a pipe bundle heat exchanger is manufactured wherein a plurality of pipes (3) are soldered on at least one perforated sheet (1) and the pipes (3) are arranged with the perforated sheet (1) in an outer sheet or a cassette.

6. Method according to any one of claims 1 or 5, **characterised in that** the thermal expansion coefficient of the material of the perforated sheet (1) and of the material of the pipe (3) is in a ratio of 1:1.2 to 2, in particular 1:1.4 to 1.6.

## Revendications

1. Procédé de fabrication d'un échangeur de chaleur à faisceau tubulaire pour un véhicule automobile, **caractérisé par** les étapes de procédé suivantes :
- la préparation d'un tube (3) et d'une tôle perforée (1), dans lequel le tube (3) est formé d'un acier austénitique et la tôle perforée (1) est formée d'un acier ferritique,
- l'insertion au moins par sections du tube (3) dans une ouverture (2) de la tôle perforée (1), dans lequel un ajustement avec jeu est formé entre la surface de gainage externe (6) du tube (3) et la surface de gainage interne (7) de l'ouverture (2),
- le brasage de la section du tube (3), qui se trouve dans l'ouverture (2), avec la surface de gainage interne (7) de l'ouverture (2), dans lequel le tube (3) se dilate plus fortement que la surface de gainage interne (7) de l'ouverture (2) si bien qu'au cours de l'opération de brasage, l'intervalle entre la surface de gainage externe (6) du tube (3) et la surface de gainage interne (7) de l'ouverture (2) se rétracte á un ajustement avec serrage.

2. Procédé selon la revendication 1, **caractérisé en ce que** l'opération de brasage est réalisée à une température entre 300 et 800 degrés Celsius ou par une opération de brasage à haute température, dans lequel on utilise en particulier un flux décapant et/ou un matériau d'appoint de brasage.

3. Procédé selon l'une quelconque des revendications 1 ou 2, **caractérisé en ce que** l'on utilise pour la tôle perforée (1) un acier chromé ferritique.

4. Procédé selon l'une quelconque des revendications 1 à 3, **caractérisé en ce que** l'on utilise pour le tube (3) un acier austénitique inoxydable.

5. Procédé selon l'une quelconque des revendications 1 à 4, **caractérisé en ce que** l'on fabrique un échangeur de chaleur à faisceau tubulaire, dans lequel plusieurs tubes (3) sont brasés sur au moins une tôle perforée (1) et les tubes (3) sont agencés avec la tôle perforée (1) dans une tôle externe ou une cassette.

6. Procédé selon l'une quelconque des revendications 1 à 5, **caractérisé en ce que** le coefficient de dilatation thermique du matériau de la tôle perforée (1) et celui du matériau du tube (3) se situent dans un rapport de 1 à 1,2 à 2, en particulier de 1 à 1,4 à 1,6.
